# EUROPEAN PATENT SPECIFICATION

(11) **EP 3 015 495 B1**
(45) Date of publication and mention of the grant of the patent: **08.08.2018**
(21) Application number: 14191315.2
(22) Date of filing: 31.10.2014
(51) Int. Cl.: C08J 7/04, B32B 25/08, C08J 7/12, C09D 5/18

(54) **FLAME RESISTANT COMPOSITES**
FLAMMBESTÄNDIGE VERBUNDSTOFFE
COMPOSITES RÉSISTANT À LA FLAMME

(43) Date of publication of application: 04.05.2016
(73) Proprietor: Luxembourg Institute of Science and Technology, 4362 Esch-sur-Alzette (LU)
(72) Inventor: Apaydin, Kadir, 57490 L'HÔPITAL (FR); Bardon, Julien, 3830 SCHIFFLANGE (LU); Hilt, Florian, 57330 HETTANGE-GRANDE (FR); Laachachi, Abdelghani, 57970 YUTZ (FR)
(74) Representative: Pronovem

(56) References cited:
- WO-A1-01/89721
- WO-A1-2012/084955
- US-A1- 2008 199 629
- YU-CHIN LI ET AL: "Intumescent All-Polymer Multilayer Nanocoating Capable of Extinguishing Flame on Fabric", ADVANCED MATERIALS, vol. 23, no. 34, 29 July 2011 (2011-07-29) , pages 3926-3931, XP055184911, ISSN: 0935-9648, DOI: 10.1002/adma.201101871
- TSAFACK M J ET AL: "Plasma-induced graft-polymerization of flame retardant monomers onto PAN fabrics", SURFACE AND COATINGS TECHNOLOGY, ELSEVIER, AMSTERDAM, NL, vol. 200, no. 11, 15 March 2006 (2006-03-15), pages 3503-3510, XP024995497, ISSN: 0257-8972, DOI: 10.1016/J.SURFCOAT.2004.11.030 [retrieved on 2006-03-15]
- Gilles Frache ET AL: "Plasma-Enhanced Chemical Vapour Deposition investigated by Atmospheric-Pressure MALDI High-Resolution Mass Spectrometry usibg matrix pre-coated substrates", IMSC 2014 - 20th International Mass Spectrometry Conference: Abstract book, 17 September 2014 (2014-09-17), pages 158-159, XP55185152, Retrieved from the Internet: URL:http://www.imsc2014.ch/wp-content/uplo ads/2013/12/IMSC2014_AbstractBook_ISBN_978 -2-8399-1514-4.pdf [retrieved on 2015-04-22]

## Description

### Field of the Invention

The present invention generally relates to novel flame resistant composites and to a method to produce them.

### Background of the Invention

Fire-related occurrences have caused widespread property damage and injuries. It is well known that a wide range of commonly used materials, more particularly polymeric materials, are flammable. The improvement of the thermal stability and fire resistance properties of organic polymer materials is a major concern, particularly in the domains of transportation, building and civil and electrical engineering. To reduce the hazards from such flammable materials, flame retardants have been developed.

Such flame retardants typically include halogenated materials, such as brominated and chlorinated compounds. Drawbacks of halogenated materials include potential harm to the environment and/or humans. For instance, halogenated materials may form toxins and can be environmentally persistent. Another drawback is a lack of durability that may be typical, in some instances, to the brominated compounds. Consequently, there have been numerous attempts to replace these critically evaluated halogenated materials.

A widely used alternative to halogenated flame proofing polymers consists in the incorporation of other organic flame proofing agents, like melamine components (see e.g. WO 2013/131545), or inorganic flame proofing agents like antimony oxide (US 3,723,139), red phosphorus (DE 1 931 387), ammonium polyphosphate (EP 0 180 790), inorganic boron compounds (US 4,921,897), and metal hydroxides (US 6,750,282), into the polymer matrix.

The combined use of nitrogen comprising additives such as melamine, benzoguanamine or their condensation products and phosphoric acid, used as such or in combination with phosphorus comprising additives, such as (di)phosphinates salts, is for example disclosed in US 6,365,071 and US 6,255,371 and in US 2004/0225040. The nitrogen and phosphorus comprising additives are admixed to the polymeric material during processing. Relatively high amounts of these additives are required in order to obtain satisfactory flame proofing properties, which is reflected in a high end price and additionally may adversely affect the mechanical properties of the product.

A way to produce flame proofing substrates at a reasonable price level and without deterioration of their mechanical properties is to coat them with a flame proofing material. Examples of suitable coating methods include dip coating, spray coating or any combination thereof.

EP 2 226 364 discloses a method for producing a multilayer coating for flame retardant foam or fabric, which includes exposing a substrate to a cationic solution to produce a cationic layer deposited on the substrate. The cationic solution comprises cationic materials. The cationic materials comprise a polymer, a colloidal particle, a nanoparticle, a nitrogen-rich molecule, or any combinations thereof. The method further includes exposing the cationic layer to an anionic solution to produce an anionic layer deposited on the cationic layer to produce a layer comprising the anionic layer and the cationic layer. The anionic solution comprises a layerable material. The cationic layer together with the anionic layer make up the bilayer; the repeated exposure to the cationic mixture and then the anionic mixture may continue until the desired number of bilayers is produced. A rinsing step is required between each exposure step.

These wet-route processes, in which monomer and/or polymer is used in combination with one or more solvents for reasons of viscosity, require strict conditions for application, especially dust-free rooms at controlled temperature and humidity.

In addition, the environmental impact of the use of organic solvents cannot be neglected these days.

An attractive alternative to wet-route processes is Plasma Enhanced Chemical Vapour Deposition that already extensively has been described in literature, especially in connection with thin film formation.

A plasma is a partially ionized gas or vapour containing ions, electrons and various neutral species. In order to generate a plasma and to sustain it an energy input is needed. Therefore, an electric field, e.g. at microwave frequencies, is applied across an electrically non conducting gas (carrier gas) between two or more electrodes. In the technical area, a distinction is made between low-pressure and atmospheric-pressure discharges.

The use of plasma deposition/polymerization for the production of flameproofing coatings has already been described in the literature. US 5,856,380 discloses a flame-proof polymeric material obtained by low-temperature plasma treatment in the presence of at least one volatile, low-molecular-weight phosphorus compound. WO 01/89721 relates to the use of a plasma polymer coating as a fire and/or flame retardant coating on the surface of natural and or synthetic rubber. The coating results from exposing the surface to plasma of a monomer vapour, in particular of monomers containing halogen and/or phosphor and/or nitrogen and/or silicon.

WO 2012/084955 patent application discloses the cold plasma deposition of a fire retardant coating on polyamide. The coatings are obtained from plasma treatment of a phosphorus containing and/or a nitrogen containing and/or a halogen containing precursor.

### Technical Problem

The invention addresses the need for polymer composites (e.g. coatings) offering good flame resistance, especially in terms of increased time to ignition (TTI) and/or reduced peak of heat release rate (pHRR) as measured in the cone calorimeter.

### General Description

According to a first aspect of the invention, it is proposed a flame-resistant multi-layer composite, comprising
∘ a carbon-containing substrate;
∘ a first polymer layer applied on the substrate in a first plasma-polymerization process step; and
∘ a second polymer layer applied on the first plasma-polymer layer in a second plasma-polymerization process step, the first and second plasma-polymer layers being of different composition.
The first or the second plasma-polymer layer is obtained from plasma-polymerization of phosphorus-containing precursors or a mixture of precursors comprising phosphorus-containing precursors, whereas the other one of the first and second plasma-polymer layers is obtained from plasma-polymerization of nitrogen-containing precursors or a mixture of precursors comprising nitrogen-containing precursors. The multi-layer composite may be used in intumescent, halogen-free, flame retardants exhibiting both improved time-to-ignition (increase) and peak of heat release rate (decrease). The substrate could be any carbon-based polymer, flexible or rigid, in film, foam or fabric form. As will be appreciated, deposition of the plasma-polymer layers can be performed at atmospheric pressure in open reactors, which facilitates implementing the production process on an industrial line.

Organic polymers are intrinsically flammable and therefore many commercial polymers need to be modified to prevent or delay fire departure. This is usually carried out by the addition of flame retardant (FR) additives into the polymer. A different approach is used in accordance with the first aspect of the invention, which uses an intumescent system comprising the carbon-containing substrate and the first and second plasma-polymer layers. Intumescent systems are characterized by a material ability to swell and to foam upon heating. The formation of a carbon rich foam layer (char) during the combustion at the surface of the item to be protected has several effects contributing to fireproofing the material (increased thermal insulation, reduction of further oxygen access, reduction of fuel transport into the flame and prevention or reduction of dripping). The main constituents of an intumescent system are:
i. an inorganic acid source (such as, e.g. polyphosphates),
ii. a swelling agent that promotes the expansion by releasing an inert gas (such as, e.g. NH₃), and
iii. a carbon source which leads to a cross-linked char layer when it is exposed to the inorganic acid.

As will be appreciated, a "dry" process (i.e. solventless approach) is proposed by the present invention to achieve an efficient flame retardant composite. Indeed, the flame resistant composite includes the different ingredients of an intumescent system. An interesting advantage of the first aspect of the invention resides in the fact that the first and second plasma-polymer layers can be applied on almost any kind of carbon-based polymer substrate without modifying its bulk properties or processing the polymer substrate itself. Specifically, addition of FR additives into the polymer substrate, possibly accompanied by a degradation of the material properties can be avoided.
Preferably, the phosphorus-containing precursors are selected from the group consisting of: organophosphates, polyphosphates, organophosphonates, polyphosphonates and mixtures thereof. More preferably, the phosphorus-containing precursors are selected from organophosphates or organophosphonates, the organophosphates or organophosphonates comprising one or more polymerizable chemical groups selected from allyl, vinyl, alkyne, cyclic alkyl, acrylic, silyl and silyl ether. As used herein, "silyl" refers to the group R¹R²R³Si-, where R¹, R² and R³ are substituents. A particularly preferred subgroup of the silyl group is the alkoxysilyl group (at least one of R¹, R² and R³ is an alkoxy group).
The phosphorus-containing precursors may otherwise e.g. comprise one or more species from the group consisting of: phosphoric acid, mono-, di and trimethylphosphate, mono-, di- and triethylphosphate, mono-, di- or tripropylphosphate, mono-, di-, or tributylphosphate, mono-, di-, or triallylphosphate, vinyl phosphonic acid, dimethyl vinylphosphonate, diethyl vinylphosphonate, dipropyl vinylphosphonate, dibutyl vinylphosphonate, diallyl vinylphosphonate, dimethyl 1-methylvinylphosphonate, diethyl 1-methylvinylphosphonate, dipropyl 1-methylvinylphosphonate, dibutyl 1-methylvinylphosphonate, diallyl 1-methylvinylphosphonate, dimethyl(meth)acryloylphosphonate, diethyl (meth)acryloylphosphonate, dipropyl(meth)acryloylphosphonate, dibutyl (meth)acryloylphosphonate, diallyl(meth)acryloylphosphonate, phosphoethyl (meth)acrylate, dimethylphosphatomethyl trimethoxysilane, and diethylphosphonatoethyl triethoxysilane. Particularly preferred species that could be used as the phosphorus-containing precursors, are: triethylphosphate, diethylphosphonatoethyltriethoxysilane, dimethyl vinyl phosphonate and diethyl vinyl phosphonate.

Preferably, the phosphorus-containing layer obtained by plasma-polymerization comprises both phosphonate and phosphate groups covalently bonded to or trapped within the plasma polymer structure. This is interesting for fire retardant applications, since phosphonates are expected to provide a fire retardancy mechanism in gas phase whereas phosphates are held responsible for a condensed-phase mechanism leading to char formation with the underlying substrate.

Preferably, the nitrogen-containing precursors are selected from amines or polyamine compounds, preferably primary amines. The amines or polyamine compounds advantageously comprise one or more polymerizable chemical groups selected from allyl, vinyl, alkyne, cyclic alkane, acrylic, silyl and silyl ether. A particularly preferred subgroup of the silyl group is, also in this context, the alkoxysilyl group.

The nitrogen-containing precursors may otherwise e.g. comprise one or more species from the group consisting of: ethylamine, triethylamine, allyl amine, diallyl amine, triallyl amine, methylallyl amine, allyldimethyl amine, methyldiallyl amine, methyl 3-amino crotonate, 3-amino crotononitrile, 3-amino-1-propanol vinyl ether, N-methyl N-allyl amine, acrylonitrile, 2-aminoethyl(meth)acrylate, aminomethyl(meth)acrylate, 2-(dimethylamino)ethyl(meth)acrylate, dimethylaminomethyl(meth)acrylate, bis(dimethylamino)methyl-vinylsilane, 1,4-diamino-2-butene, benzoguanamine, guanidine, tris(hydroxyethyl) isocyanurate, allantoin, melamine, glycoluril, melamine cyanurate, and urea cyanurate.

Preferably, the phosphorus-containing precursors are selected from organophosphates or organophosphonates and the nitrogen-containing precursors are selected from amines or polyamine compounds, the organophosphates or organophosphonates and the amines or polyamine compounds comprising one or more polymerizable chemical groups selected from allyl, vinyl, alkyne, cyclic alkyl, acrylic, silyl and silyl ether.

According to a preferred embodiment of the invention both the first and the second plasma-polymer layers consist of poly(carbosiloxane) polymers (of different kinds, though).

The first plasma-polymer layer advantageously comprises an inorganic-organic polymer including siloxane moieties and amine moieties, whereas the second plasma-polymer layer comprises an inorganic-organic polymer including siloxane moieties and at least one (preferably both) of phosphate and phosphonate moieties. For example, the phosphorus-containing precursors are preferably diethylphosphonatoethyltriethoxysilane (DEPETS, CAS number 757-44-8) molecules and the nitrogen-containing precursors are preferably aminopropyltriethoxysilane (APTES, CAS number 919-30-2) molecules and/or aminopropyltrimethoxysilane (APTMS, CAS number 13822-56-5) molecules.

According to a preferred embodiment of the invention, the flame-resistant composite comprises a barrier layer applied on the second plasma-polymer layer in a further plasma-polymerization process step, the plasma-polymer barrier layer advantageously comprising a poly(carbosiloxane) polymer. The plasma-polymer barrier layer preferably has a thickness in the range from 0.1 µm to 20 µm, more preferably in the range from 0.1 µm to 10 µm, still more preferably in the range from 0.1 µm to 5 µm and most preferably in the range from 0.5 µm to 5 µm. The plasma-polymer barrier layer is most preferably obtained from plasma-polymerization of hexamethyldisiloxane (HMDSO, CAS number 107-46-0) molecules as the precursors. Preferably, in order to improve the homogeneity of the plasma the process gas used for the deposition of the plasma-polymerized HMDSO layer is a mixture of oxygen in nitrogen, the amount of oxygen being comprised in the range from 0% to 50% vol., preferably in the range from 0% to 20% vol., more preferably in the range from 2% to 10% vol., and still more preferably in the range from 3% to 6% vol. As will be appreciated, admixture of moderate amounts of oxygen gas improves the fire-retardancy provided by the plasma-polymerized HDMSO layer.

According to a particularly preferred embodiment of the invention, the phosphorus-containing precursors are DEPETS molecules, the nitrogen-containing precursors are APTES or APTMS molecules and the precursors for the barrier layer are HDMSO molecules.

Each one of the first and second plasma-polymer layers preferably has a thickness in the range from 0.1 µm to 20 µm, preferably in the range from 0.1 µm to 10 µm, more preferably in the range from 0.1 µm to 5 µm, and still more preferably in the range from 0.5 µm to 5 µm.

As mentioned before, the substrate could be any carbon-based polymer. The substrate to be coated can be flexible or rigid and may have any form, e.g., foam, film, fabric, rod, tube, irregular, etc. Preferably, the substrate is selected from the group consisting of
∘ polymers and copolymers of mono-, di- or cycloolefins, e.g. polyethylene, polypropylene, polyisobutylene, polybutylene, poly-1-butene, polyisoprene, polybutadiene, ethylene propylene copolymers, propylene-1-butene copolymers, propylene-isobutylene copolymers, ethylene-1-butene copolymers and blends thereof;
∘ copolymers of mono- or of diolefins with other ethylenically unsaturated monomers, e.g. ethylene-alkyl acrylate copolymers, ethylene-vinyl acetate copolymers, ethylene-acrylic acid copolymers and blends thereof;
∘ polystyrene, poly(p-methylstyrene), poly(α-methylstyrene);
∘ Copolymers of styrene or α-methylstyrene with dienes or other ethylenically unsaturated monomers, e.g. styrene-butadiene, styrene-acrylonitrile, styrene-alkyl methacrylate, styrene-butadiene-alkyl acrylate, styrene-butadiene-alkyl methacrylate, styrene-maleic anhydride, styrene-acrylonitrile-methacrylate, styrene-butadiene-styrene, styrene-isoprene-styrene and graft copolymers thereof e.g. styrene, acrylonitrile and methyl methacrylate on polybutadiene, styrene and acrylonitrile on acrylate-butadiene copolymers, and blends thereof;
∘ Halogen-containing polymers and copolymers, e.g. polychloroprene, chlorinated rubber, chlorinated or brominated copolymers made from isobutylene-isoprene, polyvinyl chloride, polyvinylidene chloride, polyvinyl fluoride, polyvinylidene fluoride, vinyl chloride-vinylidene chloride, vinyl chloride-vinyl acetate and vinylidene chloride-vinyl acetate;
∘ Polymers and copolymers derived from α,β-unsaturated acids or from derivatives of these, e.g. polyacrylates and polymethacrylates, polyacrylamides, polyacrylonitriles and acrylonitrile-alkyl acrylate copolymers;
∘ Copolymers of α,β-unsaturated acids or of derivatives of these with other ethylenically unsaturated monomers, e.g. acrylonitrile-butadiene copolymers, acrylonitrile-vinyl halide copolymers and acrylonitrile-alkyl methacrylate-butadiene terpolymers;
∘ Polymers and copolymers derived from unsaturated alcohols and amines and respectively, from their acetyl derivatives or acetals, e.g. polyvinyl alcohol, polyvinyl acetate, polyvinyl stearate, polyvinyl benzoate, polyvinyl maleate, polyvinyl butyral, polyallylphthalate, polyallylmelamine;
∘ Polyoxymethylene homo- and copolymers;
∘ Polyphenylene oxides, polyphenylene sulfides and mixtures of these oxides or sulfides with styrene polymers or with polyamides;
∘ Polyamides and copolyamides derived from diamines and from dicarboxylic acids and/or from aminocarboxylic acids or from the corresponding lactams, e.g. nylon-4, nylon-6, nylon 6-6, polyamides prepared from hexamethylenediamine and iso- and/or terephthalic acid and block copolymers of the abovementioned polyamides with olefin polymers and copolymers
∘ Polyureas, polyimides, polyamideimides, polyetherimides, polyesterimides, polyhydantoins and polybenzimidazoles;
∘ Polyesters derived from dicarboxylic acids and from dialcohols and/or from hydroxycarboxylic acids or from the corresponding lactones, e.g. polyethylene terephthalate, polybutylene terephthalate, poly-1,4-dimethylolcyclohexane terephthalate;
∘ Polyesteramides;
∘ Polycarbonates and polyester carbonates;
∘ Polyurethanes derived from diisocyanates and polyether-, polyester- and/or polycaprolactone polyols;
∘ and blends of the abovementioned polymers and copolymers, e.g. polyvinyl chloride/polyvinyl acetate, polycarbonate/thermoplastic polyurethane and polyphenylene oxide/nylon 6,6.

According to preferred embodiments of the invention, at least one layer of the first and second plasma-polymer layers and the plasma-polymer barrier layer comprises metal oxide nanoparticles embedded therein, the amount of metal oxide nanoparticles in the at least one layer being comprised in the range from 0.1 wt% to 20 wt%, and preferably in the range from 1 wt% to 10 wt%. The metal oxide nanoparticles may be functionalized or not by monomer or polymer molecules obtained from phosphorus-containing precursors or nitrogen-containing precursors. The metal oxide nanoparticles may, e.g., be selected from the group consisting of MgO, CaO, BaO, Y₂O₃, TiO₂, ZrO₂, ZrTiO₄, V₂O₅, Cr₂O₃, MoO₃, WO₃, Fe₂O₃, NiO, CuO, Cu₂O, ZnO, CdO, Al₂O₃, Ga₂O₃, In₂O₃, SnO, SnO₂, CeO₂, Sb₂O₃ and mixtures thereof. Among these species, TiO₂, ZnO, Al₂O₃, MgO, Fe₂O₃ and Sb₂O₃ are particularly preferred. The nanoparticles and the precursors may be introduced into the reaction chamber either separately from but simultaneously with the precursors or as a dispersion of nanoparticles in the precursors. The nanoparticles may e.g. be dispersed in a non-polymer forming liquid such as a solvent and injected into the reaction chamber by means of an atomizer while the precursors are introduced via a separate path. If the metal oxide nanoparticles are provided as a dispersion in the precursors, the dispersion is directly atomized and injected into the reaction chamber.

A second aspect of the present invention relates to the use of a flame-resistant multi-layer composite as described hereinabove as a protection of an electric or electronic component, e.g. a printed circuit board, a cable, a wire, a connector, etc., of a textile, of furniture, of a building component, of a decoration element, or of a vehicle component.

### Brief Description of the Drawings

The accompanying drawings illustrate several aspects of the present invention and, together with the detailed description, serve to explain the principles thereof. In the drawings:
Fig. 1: schematically illustrates a substrate coated with a triple layer (trilayer) of plasma-deposited polymers, such that an intumescent system is formed;
Fig. 2: is a schematic of a dielectric barrier discharge reactor for plasma-polymer deposition;
Fig. 3: is a graph illustrating the heat release rate (HRR) curves of a preferred example of an intumescent system in accordance with the present invention in comparison with the naked substrate;
Fig. 4: is a graph illustrating how the inorganic character of plasma-polymerized HMDSO changes with increased oxygen content in a nitrogen-oxygen process gas mixture.

### Detailed Description of one or more Preferred Embodiments

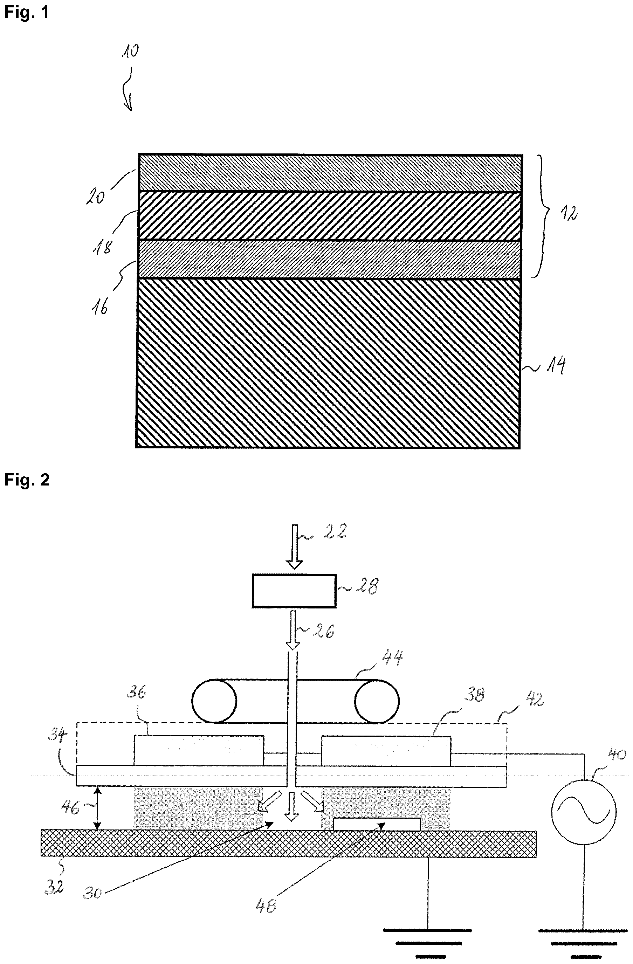

Fig. 1 schematically shows a fire-resistant composite according to a preferred embodiment of the invention. The fire-resistant composite 10 comprises a trilayer coating 12 on a carbon-based polymer substrate 14 and forms an intumescent system. In the example described herein for the illustration of the invention, the first layer 16 on the substrate 14 consists of plasma-polymerized aminopropyltriethoxysilane (ppAPTES, the prefix pp- hereinafter stands for "plasma-polymerized"). During the plasma-polymerization process, the silyl groups of the precursors form parts of a stable polymer backbone. When exposed to high temperatures (> 250°C), due to the presence of the primary amine groups, the first layer 16 releases ammoniac, which acts as a swelling agent. The thickness of the ppAPTES layer in this example is 1 µm. The second layer 18 is deposited from diethylphosphonatoethyltriethoxysilane (DEPETS) on the ppAPTES layer during a subsequent plasma-polymerization process step. The silyl groups of the precursors form part of the stable polymer backbone. The ppDEPETS layer constitutes an acid source, as it releases phosphoric and/or phosphonic acid stemming from the phosphate and/or phosphonate groups contained in its chemical structure. The thickness of the ppDEPETS layer in this example is 3.5 µm. The third (and top) layer 20 is deposited from hexamethyldisiloxane (HMDSO) on the ppDEPETS layer during a third plasma-polymerization process step. The ppHMDSO layer forms a physical barrier to the components underneath, especially to the substances released from the polymers in high-temperature conditions. The thickness of the ppHMDSO layer in this example is 2 µm.

In the plasma polymerization processes, the starting material monomers, i.e. the low-molecular-weight phosphorus-comprising compound (here: DEPETS), the low-molecular-weight nitrogen comprising compound (here: APTES) and the organosilicon compound (here: HMDSO), respectively, interact with the energetic species (electrons, metastable species, ions) and the UV radiation in the gas phase or on the surface, effecting the breaking of chemical bonds and thus creating free radicals. These free radicals lead to radical polymerization of the starting material monomer and its deposition on the surface, thus creating a coating.

In a low-temperature plasma, excited electrons can reach such high energies that they are able to cause a chemical reaction.

Low temperature plasma is usually generated under reduced pressures generally of from about 1 Pa to 1000 Pa. As the pressure increases and approaches atmospheric pressure, low temperature plasma turns to be thermal plasma if ions and electrons reach nearly equally high temperatures. These thermal plasmas are in thermal equilibrium. Among the different approaches to generate non-equilibrium and therefore low temperature plasmas, at atmospheric pressure, dielectric barrier discharges have been devised as an attractive route.

Dielectric barrier discharge combines the advantages of low temperature plasmas and operation at atmospheric or near-atmospheric pressures. Atmospheric pressure dielectric barrier discharge vapour polymerization deposition is a versatile technology allowing the deposition of a wide variety of coatings from organic monomers. No vacuum system is required in comparison with low-pressure plasmas. It therefore offers the possibility to develop a reliable surface treatment process that can match the industrial requirements of productivity. Besides, it is an environmentally friendly process which prevents from using solvents. Furthermore, inexpensive process gases such as nitrogen or air can be used.

Dielectric barrier discharges are characterized by the presence of one or more dielectric material(s) in the current path between the metal electrodes. Typically the dielectric material has a thickness comprised between about 0.2 and about 5 mm. The presence of the dielectrics precludes Direct Current operation. Common dielectric materials include glass, quartz, ceramics and polymers. The process requires high alternating currents with frequencies ranging from about 50 Hz to about 500 kHz. For atmospheric pressure discharges, a gap spacing (= spacing between the ground electrode and the driven electrode) is typically comprised between about 0.2 and about 10 mm requiring driving alternating voltages typically comprised between about 3 and about 50 kV.

Despite the fact that dielectric barrier discharges are usually used in an open reactor, depositions of the different pp-layers in the context of the present invention can be carried out in a closed reactor at atmospheric pressure. Preferably, after the deposition of each pp-layer the reaction chamber is preferably purged. For purging the reaction chamber, process gas may be used.

The phosphorus comprising compound and the nitrogen comprising compound are plasma polymerized by means of low temperature plasma deposition at atmospheric pressure where the main process gas is nitrogen.

Fig. 2 schematically represents the atmospheric pressure dielectric barrier discharge device used for producing the flame resistant composite of the preferred embodiments of the invention. The liquid precursor is transformed into an aerosol by means of an atomizer or is transformed into a vapor by means of a bubbler system. The precursor injection means (atomizer or bubbler system) are indicated by reference number 28. The mixture 26 of the process gas 22 and the precursor (as an aerosol or as a vapor) is injected into the reaction chamber 30, delimited by the grounded bottom plate 32 (ground electrode) and a dielectric plate 34 that separates the coplanar high-voltage electrodes 36, 38 from the reaction chamber 30. The high-voltage electrodes 36, 38 are connected to alternating voltage source 40. The dielectric material and the high-voltage electrodes are arranged on a moving stage 42, which is moved to and fro relative to the bottom plate 32 by a motor 44. The dielectric material 34 and the bottom plate 32 are spaced from another by a distance called the gap spacing 46. The bottom plate 32 carries the substrate 48 to be coated.

The different pp-layers of an example pp-trilayer are described in more detail hereinafter.

### 1) Substrate

In the experiments, polycarbonate PC plates, purchased from Goodfellow (Cambridge, England), with a thickness of 0.5 mm were used as the substrate. As an alternative, polyamide-6 (PA6) plates, also available from Goodfellow, could be used. PC substrates have been used for the cone calorimetry test.

### 2) pp-APTES layer

The amine rich layer of the pp-trilayer coating is deposited from aminopropyl triethoxysilane (APTES) precursor. The APTES layer is deposited in a reactor operated in a dielectric barrier discharge (DBD) configuration, as shown in Fig. 2. The coating deposition is operated at atmospheric pressure. The reactor is constituted of two flat parallel high voltage electrodes (2 × 0.7 × 15 cm²) covered with alumina and a moving stage as grounded electrode (10 mm.s⁻¹). Gap distance is set to 1 mm. The plasma is ignited by a high voltage alternating current (10 kHz) in chopped mode (tₒₙ is 10 ms and t_{off} is 40 ms, therefore the duty cycle is 20%). It is generated by a Corona generator 7010R from SOFTAL electronic GmbH. The power density dissipated during tₒₙ is calculated to be 2 W.cm⁻² by an electrical measurement. The precursor, APTES, is injected into the reactor using a classic bubbler system made of a cylinder and a frit. The process gas line is a gas mixture of nitrogen (7.5 L/min) and hydrogen (0.5 L/min). It is added to a nitrogen gas line going through the APTES bubbler and set to 12 L/min. During a deposition experiment, the moving stage is moved to and fro under the high voltage electrode. Effective deposition time is 980 s, which corresponds to a coating thickness close to 1 µm.

### 3) ppDEPETS layer

The precursor for the plasma polymer coating is diethylphosphonatoethyltriethoxysilane (DEPETS) purchased from ABCR company. It is used as received in the plasma deposition experiments.

Plasma polymer coatings from DEPETS were deposited in a semi-dynamic DBD reactor in open atmosphere generally as illustrated in Fig. 2. The precursor was atomized with an atomization pressure of 2 bar (nitrogen), corresponding to an aerosol flow of 0.11 g/min. It was injected into the N₂ carrier gas before entering the plasma zone through a slit between the two top electrodes. Gap distance and N₂ gas flow were set to 2 mm and 20 L/min, respectively. Substrates were positioned in holes in the bottom electrode so that their external surfaces were at the same level as the rest of the bottom electrode. During the deposition experiment, the top electrode block is moved to and fro over the sample (i.e. the substrate covered with the pp-APTES layer) at a constant speed (4 m/min) and the coating thickness was controlled by the duration of the plasma deposition process.

Plasma was generated with a chopped alternating current signal. On-time, i.e. time when high voltage was on, was set to 5 ms and was followed by a 5 ms off-time. Peak-to-peak voltage and frequency during on-time were 30kV and 6 kHz, respectively. Average power was set to 500 W, which corresponded to a power density close to 0.8 W/cm².

Different measurements (Fourier transform infrared spectroscopy, FTIR; laser desorption ionization (LDI) coupled to mass spectrometry (MS); nuclear magnetic resonances (¹³C NMR, ²⁹Si NMR, ³¹P NMR)) were made to characterize ppDEPETS layers obtained in the above conditions. Comparison between the FTIR spectra of the DEPETS precursors and the ppDEPETS layers shows that the chemical structure of the precursor is partially conserved in the plasma polymer. LDI-MS and NMR evidenced the formation of a poly(carbosiloxane) structure in the plasma polymer.

NMR ³¹P spectra obtained from pp-DEPETS reveal the presence of phosphate groups, polyphosphate groups and of phosphonate groups, these three groups either as free molecules trapped in the plasma polymer or as linked to the plasma polymer through organic groups like methyl or ethyl groups. Without wanting to be bound by theory, the inventors consider that the presence of both phosphonate and phosphate groups in the plasma polymer structure represent a significant contribution to the fire-retardant properties of the trilayer pp-coating. It is presently considered that phosphonates provide a fire-retarding mechanism in gas phase while phosphates are responsible for a condensed-phase mechanism leading to char formation in the presence of a source of carbon.

### 4) ppHMDSO layer

The ppHMDSO layer was deposited with the total gas flow set to 80 L/min. The process gas was a gas mixture of 4.5% vol. oxygen in nitrogen. The atomization pressure was set to 0.8 bar, yielding a precursor flow of 0.6 g/min. The power was set to 500 W, which corresponds to a power density of about 0.8 W/cm². The frequency of the high voltage was 6 kHz.

One observes that an admixture of oxygen to nitrogen as the process gas increases the inorganic character of the ppHMDSO layer (which has a hybrid organic/inorganic character due to the presence of carbon chains and siloxane chains.) Fourier transform infrared spectroscopy (FTIR) measurements carried out on different ppHDMSO layers produced with admixture of 0%, 1%, 2%, 3%, 4.5%, 9% and 20% vol. oxygen into the nitrogen process gas confirm this. On FTIR spectra of ppHMDSO one observes a large peak at 1000-1200 cm⁻¹ that changes with increasing oxygen concentration. The large peak results from the superposition of a peak at about 1090 cm⁻¹ and a peak at 1030 cm⁻¹. These peaks are related to Si-O-Si/Si-O-C stretching vibration modes. However, the peak at 1090 cm⁻¹ is assumed to result from silica-like structures since it is more pronounced when oxygen concentration increases. This would be consistent with article G. Borvon, A. Gouillet, A. Granier, G. Turban, Plasmas Polym. 2002, 7, 341. On the other hand, the peak at 2960 cm⁻¹ is attributed to -H stretching in methyl groups and is characteristic of the organic nature of the coating.

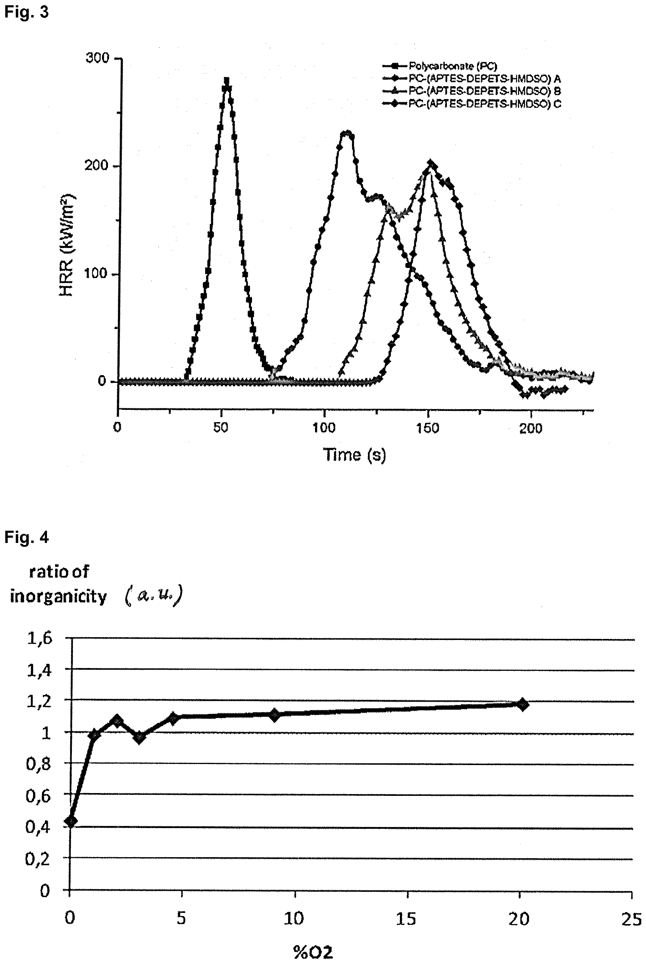

Therefore, indicator of the inorganic character of the coating in comparison to the organic character is obtained by calculating the ratio of the peak intensity at 1090 cm⁻¹ to the peak intensity at 2960 cm⁻¹. That indicator, illustrated in Fig. 4, is a semi-quantitative value, which increases when the inorganic character increases. As regards the indicator chosen, one observes a steep increase thereof when the oxygen content in the process gas increases from 0% (pure nitrogen) to 1% vol.. For larger oxygen ratios, the inorganicity indicator increases slowly. A dip observed for 3% vol. oxygen content is most probably due to a measurement error.

HMDSO plasma coatings are deposited on polycarbonate substrate and the influence of oxygen concentration on the fire resistance of coated polycarbonate is tested by cone calorimeter. An improvement in terms of time to ignition is observed when HMDSO plasma coatings are performed in high levels (e.g. 4.5 and 20% vol.) of oxygen admixture in nitrogen. The improvement in terms of TTI is attributed to the more pronounced inorganic character of the ppHMDSO layer. However, since very inorganic coatings tend to be less resilient and thus more fragile, it is expected that they would fail because of the thermal expansion of the underlying ppDEPETS and ppAPTES layers and of the substrate during heating. Accordingly, the amount of oxygen in the process gas is therefore preferably below 20% vol.

### Measurements and Results

FTIR spectroscopy was carried out in transmission mode with a Bruker Optics Tensor 27 spectrometer. Two-side polished silicon wafers, purchased from Siltronix (France), have been used as substrates for the characterization. The spectrum measured with the bare wafer was recorded as a background signal.

Solid state NMR was performed for three different nuclei: ³¹P, ¹³C and ²⁹Si. ³¹P NMR measurements were performed using a Bruker Avance II 400 spectrometer (static field 9.4 T) operating at a Larmor frequency of 79.22 MHz. Bruker probe heads equipped with 3.2 mm Magic Angle Spinning (MAS) assembly were used and the spinning rate of the rotor was 15 kHz. H₃PO₄ in aqueous solution (85%) was used as a reference. Depending on the number of the bridging oxygen atoms, the phosphate tetrahedra can be described as Qⁱ, where i represents the number of the bridging oxygen atoms and can have a value of 0, 1, 2, 3. That notation was first used in E. Lippmaa, A. Samoson, M. Mägi, Journal of the American Chemical Society, 1986, 108, 1730-1735 and is widely accepted in the literature for describing structures of phosphates and silicates.

A framework built up with Q³ denotes a fully condensed structure, while Q² entities are indicative of two-dimensional (sub-) structures based on chains or rings. Q¹ means two tetrahedral connected by a corner and Q⁰ means isolated tetrahedra. Q⁰ units are for example characteristic for orthophosphate structures.

¹³C NMR measurements were performed on the same spectrometer as mentioned above with MAS at 10 kHz and proton ¹H-¹³C cross-polarization (CP). Tetramethylsilane was used as a reference.

²⁹Si NMR experiments were performed on the same spectrometer as mentioned above. The ground samples were packed in 4-mm fused zirconia rotors and sealed with Kel-F caps. The spectra were recorded at MAS of 5 kHz with 1H-29Si CP. The measurements were recorded for 4 days to get an acceptable signal-to-noise ratio.

The fire-retardant properties were studied using a cone calorimeter in accordance with the procedure defined in ISO 5660-1 and ASTM D7309. Various parameters can be measured by the cone calorimeter (Fire Testing Technology): time to ignition (TTI), time of flameout (TOF), heat release rate (HRR) as a function of time, peak of heat release rate (pHRR), total heat release (THR), time to pHRR (tpHRR), mass loss rate (MLR) and total smoke released (TSR). Here, only the TTI and pHRR of uncoated or coated polycarbonate and polyamide 6 films were examined. 50 x 50 x 0.5 mm³ polycarbonate and polyamide-6 samples was exposed to an external heat flux of 50 kW/m² and 25 kW/m², respectively. All the experiments were repeated in triplicate and the values were reproducible within ± 10 % and ± 25 % (relative standard deviation) for polycarbonate and polyamide 6 samples, respectively.

Fig. 3 shows cone calorimeter results obtained for pp-trilayers of APTES, DEPETS and HMDSO on a polycarbonate substrate of 0.5 mm thickness in comparison with the results of the naked substrate.

As can be appreciated, the results show that application of the pp-trilayers results in a significant increase of the time-to-ignition (TTI) and, concomitantly, a decrease of the peak heat release rate (pHRR). This result is remarkable as it is has been found extremely difficult to simultaneously achieve an improvement of both TTI (increase) and pHRR (decrease). Previous results reported in the scientific literature indeed suggest that a reduced pHRR is always accompanied by a reduced, or at best, invariable TTI while an increased TTI typically comes at the price of an increased pHRR. Fig. 3 also illustrates that the shape of the HRR curves of the pp-trilayer samples is substantially different from the shape of the HRR curve of the naked substrate: apart from later ignition, combustion starts more slowly but also declines more slowly once the pHRR has been reached. Samples A, B and C were produced in the same conditions: while there are differences in the curves, each of the samples showed a significant decrease in pHRR and a significant increase in TTI.

## Claims

1. A flame-resistant multi-layer composite, comprising
a carbon-containing substrate;
a first plasma-polymer layer applied on said substrate;
a second plasma-polymer layer applied on said first plasma-polymer layer, said first and second plasma-polymer layers being of different composition;
one of said first and second plasma-polymer layers obtained from plasma-polymerization of phosphorus-containing precursors or a mixture of precursors comprising phosphorus-containing precursors;
the other one of said first and second plasma-polymer layers obtained from plasma-polymerization of nitrogen-containing precursors or a mixture of precursors comprising nitrogen-containing precursors.

2. The composite of claim 1, wherein said phosphorus-containing precursors are selected from the group consisting of: organophosphates, polyphosphates, organophosphonates, polyphosphonates and mixtures thereof.

3. The composite of claim 1, wherein said phosphorus-containing precursors are selected from organophosphates or organophosphonates, said organophosphates or organophosphonates comprising one or more polymerizable chemical groups selected from allyl, vinyl, alkyne, cyclic alkyl, acrylic, silyl and silyl ether.

4. The composite of claim 1, 2 or 3, wherein said nitrogen-containing precursors are selected from amine or polyamine compounds, preferably primary amines.

5. The composite of claim 4, wherein said amines or polyamines compounds comprise one or more polymerizable chemical groups selected from allyl, vinyl, alkyne, cyclic alkyl, acrylic, silyl and silyl ether.

6. The composite as claimed in claims 3 and 5.

7. The composite as claimed in claim 6, wherein said first and second plasma-polymer layers consist of poly(carbosiloxane) polymers.

8. The composite as claimed in claim 6, wherein said first plasma-polymer layer comprises an inorganic-organic polymer including siloxane moieties and amine moieties, wherein said second plasma-polymer layer comprises an inorganic-organic polymer including siloxane moieties and at least one of phosphate and phosphonate moieties.

9. The composite as claimed in claim 8, wherein said phosphorus-containing precursors are diethylphosphonatoethyltriethoxysilane molecules and wherein said nitrogen-containing precursors are aminopropyltriethoxysilane molecules and/or aminopropyltrimethoxysilane molecules.

10. The composite as claimed in any one of claims 1 to 10, further comprising a plasma-polymer barrier layer applied on said second plasma-polymer layer, said plasma-polymer barrier layer comprising a poly(carbosiloxane) polymer, the plasma-polymer barrier layer having preferably a thickness in the range from 0.1 µm to 20 µm, more preferably in the range from 0.1 µm to 10 µm, still more preferably in the range from 0.1 µm to 5 µm, and most preferably in the range from 0.5 µm to 5 µm.

11. The composite as claimed in claim 11, wherein said plasma-polymer barrier layer is obtained from plasma-polymerization of hexamethyldisiloxane molecules.

12. The composite as claimed in claim 9 and one of claims 10 and 11.

13. The composite as claimed in any one of claims 1 to 12, wherein each one of said first and second plasma-polymer layers has a thickness in the range from 0.1 µm to 20 µm, preferably in the range from 0.1 µm to 10 µm, more preferably in the range from 0.1 µm to 5 µm, still more preferably in the range from 0.1 µm to 5 µm and most preferably in the range from 0.5 µm to 5 µm.

14. The composite as claimed in any one of claims 1 to 13, wherein said substrate is selected from the group consisting of
∘ polymers and copolymers of mono-, di- or cycloolefins;
∘ copolymers of mono- or of diolefins with other ethylenically unsaturated monomers;
∘ polystyrene, poly(p-methylstyrene), poly(α-methylstyrene);
∘ Copolymers of styrene or α-methylstyrene with dienes or other ethylenically unsaturated monomers;
∘ Halogen-containing polymers and copolymers;
∘ Polymers and copolymers derived from α,β-unsaturated acids or from derivatives of these;
∘ Copolymers of α,β-unsaturated acids or of derivatives of these with other ethylenically unsaturated monomers;
∘ Polymers and copolymers derived from unsaturated alcohols and amines and respectively, from their acetyl derivatives or acetals;
∘ Polyoxymethylene homo- and copolymers;
∘ Polyphenylene oxides, polyphenylene sulfides and mixtures of these oxides or sulfides with styrene polymers or with polyamides;
∘ Polyamides and copolyamides derived from diamines and from dicarboxylic acids and/or from aminocarboxylic acids or from the corresponding lactams
∘ Polyureas, polyimides, polyamideimides, polyetherimides, polyesterimides, polyhydantoins and polybenzimidazoles;
∘ Polyesters derived from dicarboxylic acids and from dialcohols and/or from hydroxycarboxylic acids or from the corresponding lactones;
∘ Polyesteramides;
∘ Polycarbonates and polyester carbonates;
∘ Polyurethanes derived from diisocyanates and polyether-, polyester- and/or polycaprolactone polyols;
∘ and blends of the abovementioned polymers and copolymers.

15. The composite as claimed in any one of claims 1 to 14, wherein at least one layer of said first and second plasma-polymer layers, or if this claim depends directly or indirectly on claim 10, at least one layer of said first plasma-polymer layer, said second plasma-polymer layer and said plasma-polymer barrier layer comprises metal oxide nanoparticles, the amount of metal oxide nanoparticles in said at least one layer being comprised in the range from 0.1 wt% to 20 wt%, preferably in the range from 1 wt% to 10 wt%.

16. Use of a flame-resistant multi-layer composite as claimed in any one of claims 1 to 15 as a protection of an electric or electronic component, e.g. a printed circuit board, a cable, a wire, a connector, etc., of a textile, of furniture, of a building component, of a decoration element, or of a vehicle component.

## Patentansprüche

1. Flammbeständiger mehrschichtiger Verbundstoff, umfassend:
ein kohlenstoffhaltiges Substrat;
eine erste Plasmapolymerschicht, die auf das Substrat aufgebracht ist;
eine zweite Plasmapolymerschicht, die auf die erste Plasmapolymerschicht aufgebracht ist, wobei die erste und die zweite Plasmapolymerschicht eine unterschiedliche Zusammensetzung haben;
eine von der ersten und der zweiten Plasmapolymerschicht aus Plasmapolymerisation von phosphorhaltigen Vorläufern oder einer Mischung von Vorläufern erhalten wird, die phosphorhaltige Vorläufer umfassen;
die andere der ersten und der zweiten Plasmapolymerschicht aus Plasmapolymerisation von stickstoffhaltigen Vorläufern oder einer Mischung von Vorläufern erhalten wird, die stickstoffhaltige Vorläufer umfassen.

2. Verbundstoff nach Anspruch 1, wobei die phosphorhaltigen Vorläufer ausgewählt sind aus der Gruppe bestehend aus Organophosphaten, Polyphosphaten, Organophosphonaten, Polyphosphonaten und Mischungen davon.

3. Verbundstoff nach Anspruch 1, wobei die phosphorhaltigen Vorläufer ausgewählt sind aus Organophosphaten oder Organophosphonaten, wobei die Organophosphate oder Organophosphonate eine oder mehrere polymerisierbare chemische Gruppen umfassen, die ausgewählt sind aus Allyl, Vinyl, Alkin, cyclischem Alkyl, Acryl, Silyl und Silylether.

4. Verbundstoff nach Anspruch 1, 2 oder 3, wobei die stickstoffhaltigen Vorläufer ausgewählt sind aus Amin- oder Polyaminverbindungen, vorzugsweise primären Aminen.

5. Verbundstoff nach Anspruch 4, wobei die Amine oder Polyaminverbindungen eine oder mehrere polymerisierbare chemische Gruppen umfassen, die ausgewählt sind aus Allyl, Vinyl, Alkin, cyclischem Alkyl, Acryl, Silyl und Silylether.

6. Verbundstoff nach den Ansprüchen 3 und 5.

7. Verbundstoff nach Anspruch 6, wobei die erste und die zweite Plasmapolymerschicht aus Poly(carboxysiloxan)polymeren bestehen.

8. Verbundstoff nach Anspruch 6, wobei die erste Plasmapolymerschicht ein anorganisch-organisches Polymer umfasst, das Siloxananteile und Aminanteile einschließt, wobei die zweite Plasmapolymerschicht ein anorganisch-organisches Polymer umfasst, das Siloxananteile und mindestens eines von Phosphat- und Phosphonatanteilen einschließt.

9. Verbundstoff nach Anspruch 8, wobei die phosphorhaltigen Vorläufer Diethylphosphonatoethyltriethoxysilanmoleküle sind, und wobei die stickstoffhaltigen Vorläufer Aminopropyltriethoxysilanmoleküle und/oder Aminopropyltrimethoxysilanmoleküle sind.

10. Verbundstoff nach einem der Ansprüche 1 bis 10, ferner umfassend eine Plasmapolymerbarriereschicht, die auf die zweite Plasmapolymerschicht aufgebracht ist, wobei die Plasmapolymerbarriereschicht ein Poly(carbosiloxan)polymer umfasst, wobei die Plasmapolymerbarriereschicht vorzugsweise eine Dicke im Bereich von 0,1 µm bis 20 µm, bevorzugter im Bereich von 0,1 µm bis 10 µm, noch bevorzugter im Bereich von 0,1 µm bis 5 µm und am meisten bevorzugt im Bereich von 0,5 µm bis 5 µm aufweist.

11. Verbundstoff nach Anspruch 11, wobei die Plasmapolymerbarriereschicht aus Plasmapolymerisation von Hexamethyldisiloxanmolekülen erhalten wird.

12. Verbundstoff nach Anspruch 9 und einem der Ansprüche 10 und 11.

13. Verbundstoff nach einem der Ansprüche 1 bis 12, wobei jede von der ersten und der zweiten Plasmapolymerbarriereschicht eine Dicke im Bereich von 0,1 µm bis 20 µm, bevorzugter im Bereich von 0,1 µm bis 10 µm, noch bevorzugter im Bereich von 0,1 µm bis 5 µm, noch bevorzugter im Bereich von 0,1 µm bis 5 µm und am meisten bevorzugt im Bereich von 0,5 µm bis 5 µm aufweist.

14. Verbundstoff nach einem der Ansprüche 1 bis 13, wobei das Substrat ausgewählt ist aus der Gruppe bestehend aus:
∘ Polymeren und Copolymeren von Mono-, Di- oder Cycloolefinen;
∘ Copolymeren von Mono- oder Diolefinen mit anderen ethylenisch ungesättigten Monomeren;
∘ Polystyrol, Poly(p-methylstyrol), Poly(α-methylstyrol);
∘ Copolymeren von Styrol oder α-Methylstyrol mit Dienen oder anderen ethylenisch ungesättigten Monomeren;
∘ halogenhaltigen Polymeren und Copolymeren;
∘ Polymeren und Copolymeren, die von α,β-ungesättigten Säuren oder von Derivaten von diesen abgeleitet sind;
∘ Copolymeren von α,β-ungesättigten Säuren oder Derivaten von diesen mit anderen ethylenisch ungesättigten Monomeren;
∘ Polymeren und Copolymeren, die von ungesättigten Alkoholen und Aminen beziehungsweise von deren Acetylderivaten oder Acetalen abgeleitet sind;
∘ Polyoxymethylenhomo- und -copolymeren;
∘Polyphenylenoxiden, Polyphenylensulfiden und Mischungen dieser Oxide oder Sulfide mit Styrolpolymeren oder mit Polyamiden;
∘ Polyamiden und Copolyamiden, die von Diaminen und von Dicarbonsäuren und/oder von Aminocarbonsäuren oder von den entsprechenden Lactamen abgeleitet sind;
∘ Polyharnstoffen, Polyimiden, Polyamidimiden, Polyetherimiden, Polyesterimiden, Polyhydantoinen und Polybenzimidazolen;
∘ Polyestern, die von Dicarbonsäuren und von Dialkoholen und/oder von Hydroxycarbonsäuren oder von den entsprechenden Lactonen abgeleitet sind;
∘ Polyesteramiden;
∘ Polycarbonaten und Polyestercarbonaten;
∘ Polyurethanen, die von Diisocyanaten und Polyether-, Polyester- und/oder Polycaprolactonpolyolen abgeleitet sind;
∘ und Gemischen der oben genannten Polymere und Copolymere.

15. Verbundstoff nach einem der Ansprüche 1 bis 14, wobei mindestens eine Schicht der ersten und der zweiten Plasmapolymerschicht, oder wenn dieser Anspruch direkt oder indirekt von Anspruch 10 abhängt, mindestens eine Schicht der ersten Plasmapolymerschicht, der zweiten Plasmapolymerschicht und der Plasmapolymerbarriereschicht, Metalloxidnanopartikel umfasst, wobei die Menge der Metalloxidnanopartikel in der mindestens einen Schicht im Bereich von 0,1 Gew.% bis 20 Gew.% liegt, vorzugsweise im Bereich von 1 Gew.% bis 10 Gew.%.

16. Verwendung eines flammenbeständigen mehrschichtigen Verbundstoffs nach einem der Ansprüche 1 bis 15 als Schutz für eine elektrische oder elektronische Komponente, z. B. eine gedruckte Schaltplatine, ein Kabel, einen Draht, einen Stecker, usw., für ein Textilmaterial, für Möbel, für eine Gebäudekomponente, ein Dekorationselement oder eine Fahrzeugkomponente.

## Revendications

1. Composite multicouche résistant à la flamme, comprenant
un substrat contenant du carbone ;
une première couche de polymère plasma appliquée sur ledit substrat ;
une seconde couche de polymère plasma appliquée sur ladite première couche de polymère plasma, lesdites première et seconde couches de polymère plasma ayant une composition différente ;
l'une desdites première et seconde couches de polymère plasma étant obtenue par polymérisation par plasma de précurseurs contenant du phosphore ou d'un mélange de précurseurs comprenant des précurseurs contenant du phosphore ;
l'autre desdites première et seconde couches de polymère plasma étant obtenue par polymérisation par plasma de précurseurs contenant de l'azote ou d'un mélange de précurseurs comprenant des précurseurs contenant de l'azote.

2. Composite selon la revendication 1, dans lequel lesdits précurseurs contenant du phosphore sont choisis dans le groupe constitué par : les organophosphates, les polyphosphates, les organophosphonates, les polyphosphonates et les mélanges de ceux-ci.

3. Composite selon la revendication 1, dans lequel lesdits précurseurs contenant du phosphore sont choisis parmi les organophosphates ou organophosphonates, lesdits organophosphates ou organophosphonates comprenant un ou plusieurs groupes chimiques polymérisables choisis parmi les groupes allyle, vinyle, alcyne, alkyle cyclique, acrylique, silyle et éther de silyle.

4. Composite selon la revendication 1, 2 ou 3, dans lequel lesdits précurseurs contenant de l'azote sont choisis parmi les composés amines ou polyamines, de préférence les amines primaires.

5. Composite selon la revendication 4, dans lequel lesdits composés amines ou polyamines comprennent un ou plusieurs groupes chimiques polymérisables choisis parmi les groupes allyle, vinyle, alcyne, alkyle cyclique, acrylique, silyle et éther de silyle.

6. Composite tel que revendiqué dans les revendications 3 et 5.

7. Composite tel que revendiqué dans la revendication 6, dans lequel lesdites première et seconde couches de polymère plasma sont constituées de polymères poly(carbosiloxanes) .

8. Composite tel que revendiqué dans la revendication 6, dans lequel ladite première couche de polymère plasma comprend un polymère inorganique-organique comprenant des entités siloxane et des entités amine, dans lequel ladite seconde couche de polymère plasma comprend un polymère inorganique-organique comprenant des entités siloxane et au moins l'une d'entités phosphate et phosphonate.

9. Composite tel que revendiqué dans la revendication 8, dans lequel lesdits précurseurs contenant du phosphore sont des molécules de diéthylphosphonatoéthyltriéthoxysilane et dans lequel lesdits précurseurs contenant de l'azote sont des molécules d'aminopropyltriéthoxysilane et/ou des molécules d'aminopropyltriméthoxysilane.

10. Composite tel que revendiqué dans l'une quelconque des revendications 1 à 10, comprenant en outre une couche barrière de polymère plasma appliquée sur ladite seconde couche de polymère plasma, ladite couche barrière de polymère plasma comprenant un polymère poly(carbosiloxane), la couche barrière de polymère plasma ayant de préférence une épaisseur dans la plage de 0,1 µm à 20 µm, plus préférablement dans la plage de 0,1 µm à 10 µm, plus préférablement encore dans la plage de 0,1 µm à 5 µm et le plus préférablement dans la plage de 0,5 µm à 5 µm.

11. Composite tel que revendiqué dans la revendication 11, dans lequel ladite couche barrière de polymère plasma est obtenue par polymérisation par plasma de molécules d'hexaméthyldisiloxane.

12. Composite tel que revendiqué dans la revendication 9 et l'une des revendications 10 et 11.

13. Composite tel que revendiqué dans l'une quelconque des revendications 1 à 12, dans lequel chacune desdites première et seconde couches de polymère plasma a une épaisseur dans la plage de 0,1 µm à 20 µm, de préférence dans la plage de 0,1 µm à 10 µm, plus préférablement dans la plage de 0,1 µm à 5 µm, plus préférablement encore dans la plage de 0,1 µm à 5 µm et le plus préférablement dans la plage de 0,5 µm à 5 µm.

14. Composite tel que revendiqué dans l'une quelconque des revendications 1 à 13, dans lequel ledit substrat est choisi dans le groupe constitué par
∘ les polymères et copolymères de monooléfines, de dioléfines ou de cyclooléfines ;
∘ les copolymères de monooléfines ou de dioléfines avec d'autres monomères à insaturation éthylénique ;
∘ le polystyrène, le poly(*p*-méthylstyrène), le poly(α-éthylstyrène) ;
∘ les copolymères de styrène ou d'α-méthylstyrène avec des diènes ou d'autres monomères à insaturation éthylénique ;
∘ les polymères et copolymères halogénés ;
∘ les polymères et copolymères dérivés d'acides à insaturation α,β ou de dérivés de ceux-ci ;
∘ les copolymères d'acides à insaturation α,β ou de dérivés de ceux-ci avec d'autres monomères à insaturation éthylénique ;
∘ les polymères et copolymères dérivés d'alcools et amines insaturés et respectivement, de leurs dérivés acétyliques ou acétals ;
∘ les homopolymères et copolymères de polyoxyméthylène ;
∘ les poly(oxydes de phénylène), les poly(sulfures de phénylène) et les mélanges de ces oxydes ou sulfures avec des polymères de styrène ou avec des polyamides ;
∘ les polyamides et copolyamides dérivés de diamines et d'acides dicarboxyliques et/ou d'acides aminocarboxyliques ou de leurs lactames correspondants
∘ les polyurées, les polyimides, les polyamideimides, les polyétherimides, les polyesterimides, les polyhydantoïnes et les polybenzimidazoles ;
∘ les polyesters dérivés d'acides dicarboxyliques et de diols et/ou d'acides hydroxycarboxyliques ou de leurs lactones correspondantes ;
∘ les polyesteramides ;
∘ les polycarbonates et les carbonates de polyesters ;
∘ les polyuréthanes dérivés de diisocyanates et de polyols de polyéthers, de polyesters et/ou de polycaprolactone ;
∘ et les mélanges des polymères et copolymères susmentionnés.

15. Composite tel que revendiqué dans l'une quelconque des revendications 1 à 14, dans lequel au moins une couche parmi lesdites première et seconde couches de polymère plasma ou, si cette revendication dépend directement ou indirectement de la revendication 10, au moins une couche parmi ladite première couche de polymère plasma, ladite seconde couche de polymère plasma et ladite couche barrière de polymère plasma comprend des nanoparticules d'oxyde métallique, la quantité de nanoparticules d'oxyde métallique dans ladite au moins une couche étant comprise dans la plage de 0,1 % en poids à 20 % en poids, de préférence dans la plage de 1 % en poids à 10 % en poids.

16. Utilisation d'un composite multicouche résistant à la flamme tel que revendiqué dans l'une quelconque des revendications 1 à 15 en tant que protection d'un composant électrique ou électronique, par exemple une carte de circuit imprimé, un câble, un fil, un connecteur, etc., d'un textile, d'un meuble, d'un composant de construction, d'un élément de décoration ou d'un composant de véhicule.
